Europäisches Patentamt

European Patent Office

Office européen des brevets

(19)

(11) EP 1 349 285 A1

(12) EUROPEAN PATENT APPLICATION

(43) Date of publication:
01.10.2003 Bulletin 2003/40

(51) Int Cl.⁷: H03M 7/30, H04L 29/06

(21) Application number: 02007158.5

(22) Date of filing: 28.03.2002

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Matsushita Electric Industrial Co., Ltd.
Osaka 571-8501 (JP)**

(72) Inventors:
• **Hata, Koichi
katano, Osaka 576-0021 (JP)**
• **Miyazaki, Akihiro
Sakai, Osaka 591-8032 (JP)**

• **Ido, Daiji
Yokohamashi, Kanagawa 236-0005 (JP)**
• **Imura, Koji
Machida-shi, Tokyo 194-0013 (JP)**
• **Hakenberg, Rolf
64295 Darmstadt (DE)**
• **Burmeister, Carsten
22081 Hamburg (DE)**

(74) Representative: **Grünecker, Kinkeldey,
Stockmair & Schwanhäusser Anwaltssozietät
Maximilianstrasse 58
80538 München (DE)**

(54) **Method for making efficient use of the bits allocated to the sequence number when transmitting compressed header data**

(57) A method for determining the more appropriate moment to send an update packet initializating the sequence number in a compressed header scheme is described. It takes into consideration the available length of the sequence number, the estimated time interval between packets and the estimated required time to perform the update, so that the whole range of the sequence number is efficiently used without requiring to increase the length of the packets.

Fig. 2

**EP 1 349 285 A1**

**Description**

The present invention generally relates to a method, a transmitter and a system for transmitting compressed header data from a transmitter to a receiver and in particular to header compression mechanisms that can be used with unreliable channels.

Although several communication technologies exist for transmitting data from one terminal to another terminal, packet oriented or IP(Internet Protocol)-based protocols are often preferably chosen. To avoid transmission of unnecessary data in the packets they are compressed before being transmitted.

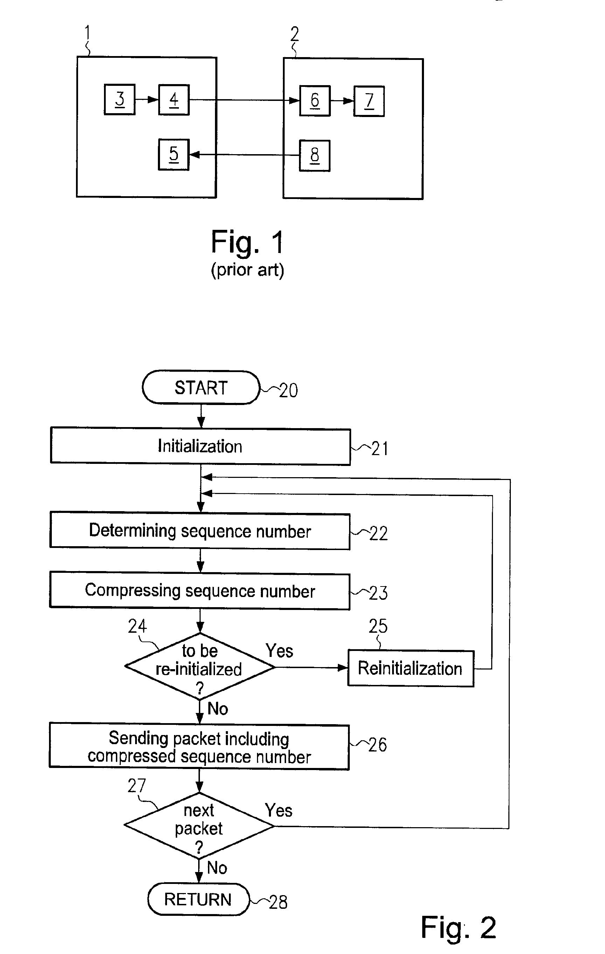

Fig. 1 illustrates a typical system that has a first terminal acting as a transmitter 1 and a second terminal acting as a receiver 2. The transmitter 1 comprises a compressor 3 connected to a transmission unit 4 for transmitting packets to the receiver 2 and a reception unit 5 for receiving packets from the receiver 2. The receiver 2 comprises a reception unit 6 for receiving packets from the transmitter 1, a decompressor 7 connected to the reception unit 6 and a transmission unit 8 for transmitting packets to the transmitter 1.

A packet transmitted from the transmitter to the receiver may comprise packet data including the main information to be transferred by a stream of packets and header data required for administration of the packets in the different protocol layers.

For example, the header of Realtime-Transport-Protocol (RTP) packets that are transmitted in compliance with the User-Datagram-Protocol/Internet-Protocol (UDP/IP) sums up to at least 40 bytes. This header contains redundant information and thus is also compressed. Header compression protocols generally remove the redundancy of the headers and encode the information to be transmitted in an efficient way. For example the above 40 byte header can be reduced to a single byte in the best case.

A header compression protocol which has been developed particularly for unreliable channels such as wireless links is specified in C. Bormann et al., "Robust Header Compression (ROHC)" [RFC3095], July 2001.

This document describes three modes of operation for compressing the header of IP/UDP/RTP packets. The third or reliable mode uses special compression algorithms to achieve robustness against the loss of packets on the compressed link.

To compress the header of an incoming packet, header files that do not change are transmitted only once at the beginning of a session for transmitting a packet stream. The remaining header fields, which may have a variable value, typically can be calculated by using the value of a RTP sequence number. Hence, in most of the cases only the RTP sequence number has to be transmitted with each packet. Accordingly, most values of header fields are either calculated from the RTP sequence number or simply decompressed by using a previously transmitted and stored value.

In the following a method of compressing and transmitting a RTP sequence number is described, wherein the RTP sequence number is referred to as the sequence number.

Corresponding to the above described approach of compressing header data, the sequence number is also compressed by splitting the sequence number in a constant portion and a variable portion for transmitting the portions separately and only if required. The most significant bits of the sequence number may be selected as the constant portion, which is transferred to the decompressor only once. Contrary thereto the least significant bits of the sequence number represent the variable portion or compressed sequence number which has to be transferred to the decompressor with each packet. Compressor and decompressor may calculate the sequence number for each packet by adding the variable compressed sequence number to the sequence number stored as a reference.

Initially, to establish a common reference, an uncompressed sequence number is transmitted in a packet which includes a CRC. The CRC is used to verify the decompressed packet, for example to detect bit errors in the compressed packet. If the decompressor was able to decompress the packet and has verified its correctness, it sends an acknowledgement to the compressor, which contains the decompressed sequence number. This acknowledged sequence number is used as a common reference sequence number.

Hence, after reception of the acknowledgement, incoming sequence numbers can be compressed by the compressor. However, the compressor has to maintain a window of sent sequence numbers which have been compressed since the acknowledged one. The initial window accordingly contains only the acknowledged sequence number. The compressed sequence number depends on the least significant bits thereof. Based on the window for sequence numbers which have been sent already the compressor calculates how many least significant bits (LSB) are needed to uniquely identify the sequence number. Thus, the number of LSB increases with the number of packets in the window. After finding the minimum number of LSB the compressor has to choose a packet type which contains at least the calculated number of bits required for the sequence number. In the above third or reliable mode the smallest packet contains 6 LSB of the sequence number.

Then the packet is sent to the decompressor and the sequence number is added to the window. However, as the window size grows the minimum number of LSB and correspondingly the packet size increases as well.

The compressor can decide to continue increasing the window size and sending the smallest possible packet size, which will lead to increasing packet sizes after a while, or decrease the window size by sending a small number of larger packets with a CRC. By sending a packet with a CRC the compressor starts to establish a new common reference. The additional CRC byte accordingly indicates a re-initialization of the reference sequence number to the receiver.

If a CRC packet is transmitted to the decompressor and successfully decompressed, it sends an acknowledgement containing the decompressed sequence number to the compressor in the transmitter. Additionally, the receiver removes all previous packets from the window and thus uses the decompressed sequence number as a new reference sequence number.

When receiving the acknowledgement from the receiver, the compressor removes all packets that were sent before the acknowledged packet from its window. For compression of the following packets, the smaller window size can be used which reduces the minimum number of required least significant bits.

The compressor has to decide at which value of the sequence number he wants to start a re-initialization process. However, if it starts a re-initialization process at a sequence number which is too high bit rate is wasted, because the packet size of the packets increases. If on the other hand it starts the re-initialization process at a sequence number which is too low, bit rate is wasted, because too many packets indicating re-initialization are sent. Thus, the prior art system operates inefficient since there is bit rate wasted in each case.

It is the object of the invention to provide an improved method, a transmitter and a system for transmitting compressed header data which are optimized in terms of transmission efficiency, particularly with regard to the re-initialization process.

This object is solved by the subject matters of the independent claims. The dependent claims describe preferred embodiments of the invention.

According to the invention a time period needed for performing a re-initialization process of reinitializing a value of a header data item to be compressed is estimated and used for determining an optimum time for starting the re-initialization process. By estimating the time period for a re-initialization process, the re-initialization process can be started in time for finalizing the process just before an incoming packet including a critical sequence number would have to be transmitted. Hence, the mean header size is reduced and efficiency of the compression is increased, thereby avoiding any waste of bit rate.

In an advantageous embodiment of the method according to the invention a time between transmitting a packet indicating a re-initialization to the receiver and receiving an acknowledgment for this packet is measured and the measured time is used to estimate the time period needed for the re-initialization process. Under the assumption that the processing time in the receiver remains stable during a session of packet transmission, the time period can thus be estimated reliably.

In a further improved method according to the invention a critical time in which the value of the header data item is expected to reach a critical value is estimated and an optimum time for starting the re-initialization process is determined by subtracting the estimated time period for the re-initialization process from the critical time. This method is particularly adapted to start the re-initialization process just at the optimized time.

A further advantageous embodiment of the method according to the invention estimates a required time for retransmission of lost packages in accordance with information about the link status between transmitter and receiver stored in the compressor. Thus, by using existing information the estimation of the optimum time can be further improved.

In the following a preferred embodiment of the invention will be described with reference to the accompanying drawings, illustrating:

Fig. 1    a typical system for transmission of compressed header data comprising a transmitter and a receiver;

Fig. 2    a flowchart of the method for transmitting packets from a transmitter to a receiver according to a preferred embodiment of the invention;

Fig. 3    a flowchart of an initialization process performed in the process of Fig. 2;

Fig. 4    a flowchart of a re-initialization check performed in the process of Fig. 2; and

Fig. 5    a flowchart of a re-initialization process performed in the process of Fig. 2.

The method illustrated in figures 2 to 5 may be performed in a transmitter as illustrated in Fig. 1.

Fig. 2 illustrates a method for transmitting compressed header data in a stream of packets from a transmitter to a receiver. The header data preferably are compressed using a ROHC algorithm, wherein a header data item is a RTP sequence number, which is referred to as the sequence number in the following.

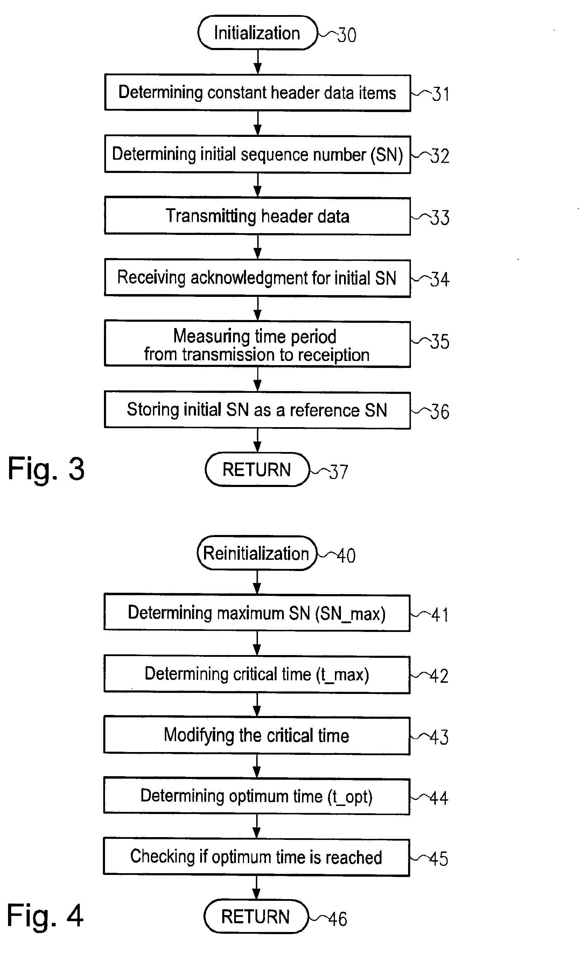

In step 21 an initialization process illustrated in more detail in Fig. 3 is performed.

Thereafter, a sequence number of a packet to be transferred is determined in step 22 and compressed in step 23. The step 23 of compressing may comprise the use of the least significant bits of the sequence number as a compressed sequence number or deriving same from the least significant bits of the sequence number. Hence, either the most significant bits or the sequence number as a whole is used as a reference sequence number respectively.

In a step 24 performing a re-initialization check it has to be checked whether to continue with the regular process of transmitting packets by performing the step 26 of sending the packet that includes the compressed sequence number, or whether the process should branch to step 25 of performing a re-initialization process, which reinitializes the value of the sequence number.

In the first case the packet including the compressed sequence number is transmitted in step 26. If further packets to be transmitted exist according to step 27, the process continues with step 22 of determining the sequence number of the next packet.

In the re-initialization check 24 a time for starting the re-initialization process is determined. Accordingly, the re-initialization process is started when the current time t has reached or exceeded the determined optimum time ($t_{opt}$):

$$t \geq t_{opt}.$$

For determining the optimum time an estimated time period ($t_{init}$) needed for performing the re-initialization process is used.

Fig. 3 illustrates an initialization process comprising steps 30 to 37. Initially, the header data items having a constant value are determined in step 31. Thereafter, an initial sequence number (SN) is determined in step 32. Subsequently the compressed header data are transmitted from the transmitter to the receiver in step 33. The transmitted header data comprises the constant header data items as well as the initial sequence number. The receiver decompresses the received packet and verifies the CRC included therein. It stores the initial sequence number as a reference sequence number and sends an acknowledgement including the initial sequence number to the transmitter. The transmitter receives the acknowledgement for the initial sequence number in step 34. Additionally, in step 36 the initial sequence number is stored as a reference sequence number in the transmitter.

For estimating a time period needed for performing a re-initialization process the transmitter measures the time period from transmission of the header data to reception of the acknowledgement in step 35.

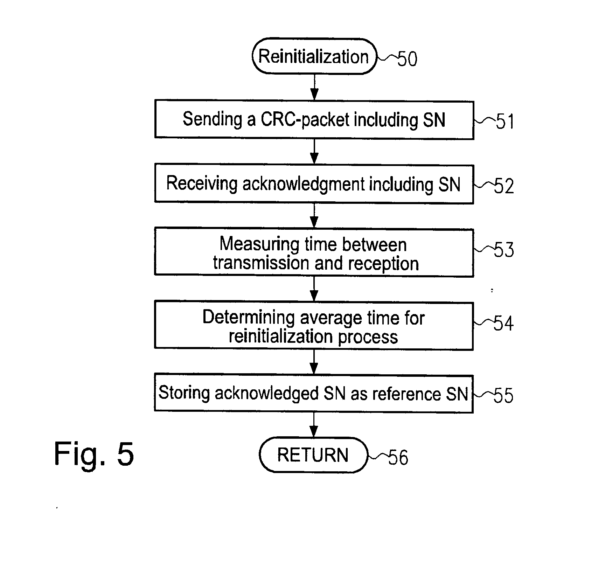

Turning back to Fig. 2, the re-initialization check 24 and the re-initialization process 25 are now described in more detail with reference to figures 4 and 5 respectively.

Fig. 4 illustrates a re-initialization check with steps 40 to 46. Initially, a maximum sequence number ($SN_{max}$) is determined for the current reference sequence number ($SN_{ref}$) in step 41. $SN_{max}$ represents the maximum sequence number for which the corresponding compressed sequence number (CSN) fits into the smallest packet type. Hence, if a compressed $CSN_{max}$ requires k bits in a packet, $CSN_{max}+1$ would require at least k+1 bits in each of the subsequent packets.

The minimum number of bits (k) required for a compressed sequence number is determined by the following equation:

$$k = [ \log_2 (SN_{max} - SN_{ref})],$$

this equation can be converted to:

$$SN_{max} = SN_{ref} + 2^k.$$

For example, in the reliable mode of ROHC k equals to 6.

Since k is a predetermined value, the maximum sequence number can be calculated as soon as $SN_{ref}$ is known. Hence, the calculation may be performed in step 41, but also previously in the initialization process illustrated in Fig. 3.

Based on the information of the maximum sequence number a critical time ($t_{max}$) is determined 42, which represents the time when the maximum sequence number is likely to be reached.

Generally, the packets arrive at the compressor with an approximately linear time-sequence-number relation and the sequence number generally increases in constant steps. Thus the compressor can estimate the time when the number of required bits exceeds the number of bits in the smallest packet type, according to the following equation:

$$t_{max} = t_{now} + (SN_{max} - SN_{now})\, T,$$

where $t_{max}$ denotes the estimated arrival time of the packet with the sequence number $SN_{max}$. $t_{now}$ is the current time and T is the expected average time between incoming packets.

In a step 43 of modifying the critical time, it may be further reduced to compensate for variations that may be expected with regard to the re-initialization process. The critical time is reduced for example according to an expected retransmission time period, which reflects the estimated time necessary for retransmissions of lost packets. For estimating a retransmission time period preferably the current transmission conditions, which are stored in the compressor for use in the compression algorithm, are evaluated. The modification of the critical time additionally may further consider variations in the arrival time of packets in the incoming packet stream and/or $t_{init,}$ which may be e.g. caused by fluctuating processing times in the decompressor. Accordingly, the critical time may be further reduced.

For finally determining the time for starting the re-initialization process, a corresponding optimal time ($t_{opt}$) is calculated in step 44.

$t_{opt}$ has to be selected in a way to allow the re-initialization process to be finalized before transmitting a packet of increased size. Hence, $SN_{max}$ should be the last sequence number used before re-initialization. The next packet would have to be sent at the time $t_{max} + T$. In another embodiment the critical time may be defined as the arrival time of the packet with the sequence number $SN_{max+1}$ ($t_{max} [SN_{max+1}] = t_{max} + T$).

Accordingly, the optimum time is calculated by subtracting the estimated time period ($t_{init}$) for performing the re-initialization process from determined arrival time of the packet having a sequence number $SN_{max+1}$:

$$t_{opt} = (t_{max} + T) - t_{init}.$$

Thereafter it can be checked in step 45, if the current time has reached or exceeded the optimum time.

As apparent from the above, the step 43 of modifying the critical time may as well be replaced by a corresponding step of modifying the estimated time period needed for performing the re-initialization process. Hence, it may also be performed in the re-initialization process 25 and/or the initialization process 21.

In case the optimum time is reached the re-initialization process illustrated in more detail in Fig. 5 is started.

In step 51 a packet including a CRC and the sequence number is sent from the transmitter to the receiver. Subsequently the acknowledgement of the receiver including the sequence number is received in step 52. The time between the step 51 of transmission and the step 52 of reception is measured in step 53. Based on the measured time an average time for the re-initialization process is determined in step 54. Finally, in step 55 the acknowledged sequence number is stored as a reference sequence number.

In more detail, for the step 53 of measuring the compressor stores the time ($t_{crc}$) at which a CRC packet was sent and additionally its sequence number. The time ($t_{ack}$) and sequence number of an acknowledgement is also stored. After receiving the acknowledgement the compressor calculates a new estimation of the time period ($t_{init}$) for example as a weighted average:

$$t_{init} = \begin{cases} t_{ack} - t_{crc} & , \text{ for } t_{init} = 0 \\ (1 - \alpha) \bullet t_{init} + \alpha \bullet (t_{ack} - t_{crc}) & , \text{ else.} \end{cases}$$

The weighting factor $\alpha$ describes the influence of the currently measured time to the running average estimation. However, alternatively any type of an averaging calculation may be used. Furthermore, $t_{init}$ may be initially set during the initialization process. The step 54 of determining the average time $t_{init}$ may as well be performed during the re-initialization check.

Instead of solely determining a round trip time corresponding to a time needed for transmitting packets back and forth, the above described step 53 of measuring additionally considers a processing time in the decompressor for the estimated time period. This processing time includes the time between reception of a CRC packet in the decompressor and sending the corresponding acknowledgement from the decompressor. The processing time is generally not known by the compressor in the transmitter, but has to be considered for estimating the time needed for a re-initialization process. During a compression session the environment does not change, hence the processing time in the decompressor is likely to be constant. Accordingly, the estimated average time $t_{init}$ can assumed to be reliable.

With reference to Fig. 2 to 5 preferred embodiments have been described using exemplary conditions. As already indicated several of the steps may be performed at different positions in the process. However, as it will become apparent from the following, the above described features can be transferred to various configurations of further embodiments.

The method according to the invention may be generally applied to systems requiring a re-initialization process for an optimized efficiency in the system. For example, the header data item may be any variable data item to be transmitted, which increases in size if not re-initialized. Furthermore, the critical value does not have to be the value of the header data item itself, but could for example also be represented by a critical complexity of an algorithm to be performed, wherein the complexity of the algorithm is reduced by re-initialization of the header data item.

Moreover, in the re-initialization process the value of the header data item may be set to a predetermined initial value, but may as well be set to the current value of the header data item or its most significant bits. Accordingly, the value stored as a reference value of the header data item may be formed by the most significant bits of the sequence number or by the sequence number itself. Preferably, the compression algorithm and the reference value are selected in a way to allow as many packets to be transferred without re-initialization as possible. Moreover, the number of least significant bits in the value of the header data item may be determined in accordance with the number of bits available in the smallest or appropriate packet type.

The system of Fig. 1, which may be used for performing the method according to the invention, only illustrates the required basic functional components. However, the transmitter 1 typically comprises further non-illustrated units such as an input section for receiving incoming packets to be transmitted, a controller and a storage unit, which may be a part of the compressor. Moreover, the transmitter 1 and the receiver 2 may be connected for packet transmission via a wired or wireless link.

**Claims**

1. A method for transmitting compressed header data in a packet stream from a transmitter to a receiver, the header data including a header data item, the method comprising:

   estimating (21;25) a time period needed for performing a re-initialization process for reinitializing a value of said header data item to be compressed;

   determining (24) a time for starting the re-initialization process, the determined time being based on the estimated time period; and

   starting (25) the re-initialization process at the determined time.

2. The method according to claim 1, wherein the header data is compressed using an RoHC (robust header compression) algorithm, and the header data item is a RTP (Realtime-Transport-Protocol) sequence number.

3. The method according to claim 1 or 2, wherein the step of starting (25) the re-initialization process comprises transmitting (51) a re-initialization packet including a CRC element, the CRC element being calculated for at least the compressed header data item.

4. The method according to one of claims 1 to 3, wherein the step of estimating (21;25) comprises:

   transmitting (33;51) a packet to the receiver for re-initializing the header data item; and

   receiving (34;52) an acknowledgement from the receiver.

5. The method according to claim 4, wherein the step of estimating (21;25) the time period further comprises:

   measuring (35;53) the time between transmitting (33;51) the packet indicating and receiving (34;52) the acknowledgement.

6. The method according to claim 5, wherein the step of estimating (25) the time period further comprises:

   determining (54) an average duration of the re-initialization process based on results of the step of measuring (35;53).

7. The method according to one of claims 1 to 6, wherein the step of determining (24) the time for starting the re-initialization process comprises:

estimating (42) a critical time in which the value of the header data item is expected to reach a critical value.

8. The method according to claim 6 or 7, wherein the step of determining (24) the time for starting the re-initialization process further comprises:

subtracting (44) the estimated time period from the critical time.

9. The method according to claim 7, wherein the step of estimating the critical time (42) comprises:

subtracting the current value from the critical value of the header data item; and

multiplying the subtraction result with a value representing a time in which the value of the header data item is expected to remain unchanged.

10. The method according to one of claims 7 to 9, wherein the step of determining (24) the time for starting the re-initialization process further comprises:

modifying (43) the estimated critical time to compensate for possible variations in time with regard to the re-initialization process.

11. The method according claim 10, wherein the step of modifying (43) the critical time comprises:

estimating a retransmission time period required for retransmitting lost packets by evaluating the current transmission conditions between the transmitter and the receiver.

12. A transmitter for transmitting compressed header data in a packet stream to a receiver, the header data including a header data item, the transmitter being adapted to perform the method according to one of claims 1 to 11.

13. A system comprising the transmitter according to claim 12 and at least one receiver.

# Fig. 1
(prior art)

START ~20

Initialization ~21

Determining sequence number ~22

Compressing sequence number ~23

24
to be
re-initialized
?
Yes → Reinitialization 25

No

Sending packet including
compressed sequence number ~26

27
next
packet
?
Yes

No

RETURN ~28

# Fig. 2

```
        ( Initialization )~30
                │
                ▼
┌──────────────────────────────────────┐
│  Determining constant header data items │~31
└──────────────────────────────────────┘
                │
                ▼
┌──────────────────────────────────────┐
│ Determining initial sequence number (SN) │~32
└──────────────────────────────────────┘
                │
                ▼
┌──────────────────────────────────────┐
│        Transmitting header data        │~33
└──────────────────────────────────────┘
                │
                ▼
┌──────────────────────────────────────┐
│  Receiving acknowledgment for initial SN │~34
└──────────────────────────────────────┘
                │
                ▼
┌──────────────────────────────────────┐
│          Measuring time period          │~35
│     from transmission to receiption     │
└──────────────────────────────────────┘
                │
                ▼
┌──────────────────────────────────────┐
│   Storing initial SN as a reference SN  │~36
└──────────────────────────────────────┘
                │
                ▼
           ( RETURN )~37
```

## Fig. 3

```
       ( Reinitialization )~40
                │
                ▼
┌──────────────────────────────────────┐
│    Determining maximum SN (SN_max)     │~41
└──────────────────────────────────────┘
                │
                ▼
┌──────────────────────────────────────┐
│     Determining critical time (t_max)   │~42
└──────────────────────────────────────┘
                │
                ▼
┌──────────────────────────────────────┐
│         Modifying the critical time     │~43
└──────────────────────────────────────┘
                │
                ▼
┌──────────────────────────────────────┐
│    Determining optimum time (t_opt)     │~44
└──────────────────────────────────────┘
                │
                ▼
┌──────────────────────────────────────┐
│   Checking if optimum time is reached   │~45
└──────────────────────────────────────┘
                │
                ▼
           ( RETURN )~46
```

## Fig. 4

```
        ╭─────────────────────╮
        │   Reinitialization  │──∿50
        ╰─────────────────────╯
                   │
                   ▼
    ┌─────────────────────────────────┐
    │  Sending a CRC-packet including SN │──∿51
    └─────────────────────────────────┘
                   │
                   ▼
    ┌─────────────────────────────────┐
    │ Receiving acknowledgment including SN │──∿52
    └─────────────────────────────────┘
                   │
                   ▼
    ┌─────────────────────────────────┐
    │       Measuring time between       │──∿53
    │     transmission and reception     │
    └─────────────────────────────────┘
                   │
                   ▼
    ┌─────────────────────────────────┐
    │     Determining average time for    │──∿54
    │       reinitialization process      │
    └─────────────────────────────────┘
                   │
                   ▼
    ┌─────────────────────────────────┐
    │ Storing acknowledged SN as reference SN │──∿55
    └─────────────────────────────────┘
                   │
                   ▼
        ╭─────────────────────╮
        │       RETURN         │──∿56
        ╰─────────────────────╯
```

# Fig. 5

**European Patent Office**

## EUROPEAN SEARCH REPORT

Application Number

EP 02 00 7158

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | C. BORMAN ET AL.: "RObust Header Compression (ROHC)" INTERNET-DRAFT, 'Online! XP002202275 Retrieved from the Internet: <URL:http://community.roxen.com/developers/idocs/rfc/rfc3095.txt> 'retrieved on 2002-06-24! * page 6 * | 1-13 | H03M7/30 H04L29/06 |
| A | * the whole document * | 1-13 | |
| X | WO 01 93486 A (NORTEL NETWORKS LTD ;BONTU CHANDRA SEKHAR (CA); BHARATIA JAYSHREE) 6 December 2001 (2001-12-06) * page 8, line 11-23; figure 2 * * page 19, line 20 - page 20, line 14 * | 12,13 | |
| A | WO 01 28180 A (NOKIA NETWORKS OY ;LE KHIEM (US)) 19 April 2001 (2001-04-19) * page 38 - page 42 * | 1-13 | |
| A | WO 01 67709 A (NOKIA NETWORKS OY ;LE KHIEM (US)) 13 September 2001 (2001-09-13) * the whole document * | 1-13 | **TECHNICAL FIELDS SEARCHED (Int.Cl.7)** H03M H04L G06F |
| A | EP 1 191 760 A (MATSUSHITA ELECTRIC IND CO LTD) 27 March 2002 (2002-03-27) * the whole document * | 1-13 | |

The present search report has been drawn up for all claims

| Place of search | Date of completion of the search | Examiner |
|---|---|---|
| MUNICH | 2 July 2002 | Agudo Cortada, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 00 7158

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2002

| Patent document cited in search report | | Publication date | Patent family member(s) | | Publication date |
|---|---|---|---|---|---|
| WO 0193486 | A | 06-12-2001 | AU | 6460901 A | 11-12-2001 |
| | | | WO | 0193486 A2 | 06-12-2001 |
| WO 0128180 | A | 19-04-2001 | AU | 8018700 A | 23-04-2001 |
| | | | WO | 0128180 A2 | 19-04-2001 |
| WO 0167709 | A | 13-09-2001 | AU | 4353301 A | 17-09-2001 |
| | | | WO | 0167709 A2 | 13-09-2001 |
| EP 1191760 | A | 27-03-2002 | JP | 2002158739 A | 31-05-2002 |
| | | | CN | 1344069 A | 10-04-2002 |
| | | | EP | 1191760 A2 | 27-03-2002 |
| | | | US | 2002031149 A1 | 14-03-2002 |

EPO FORM P0459

For more details about this annex : see Official Journal of the European Patent Office, No. 12/82